# EUROPEAN PATENT SPECIFICATION

(11) **EP 3 035 187 B1**
(45) Date of publication and mention of the grant of the patent: **21.03.2018**
(21) Application number: 14844884.8
(22) Date of filing: 04.05.2014
(51) Int. Cl.: G06F 3/06, G06F 13/40, G06F 13/42

(54) **HARD DISK AND MANAGEMENT METHOD**
FESTPLATTE UND VERWALTUNGSVERFAHREN
DISQUE DUR ET PROCÉDÉ DE GESTION

(30) Priority: 10.09.2013 CN 201310410760
(43) Date of publication of application: 22.06.2016
(73) Proprietor: Huawei Technologies Co., Ltd., Longgang District Shenzhen, Guangdong 518129 (CN)
(72) Inventor: BI, Dechun, Shenzhen Guangdong 518129 (CN); ZHANG, Yu, Shenzhen Guangdong 518129 (CN); WANG, Zhenhua, Shenzhen Guangdong 518129 (CN)
(74) Representative: Pfenning, Meinig & Partner mbB
(86) International application number: PCT/CN2014/076718
(87) International publication number: WO 2015/035791

(56) References cited:
- EP-A2- 2 083 345
- WO-A1-2012/083684
- CN-A- 1 949 386
- CN-A- 103 187 085
- CN-A- 103 473 018
- CN-U- 202 003 677
- US-A1- 2001 056 511
- US-A1- 2008 010 484
- US-B1- 7 685 329

## Description

### TECHNICAL FIELD

The present invention relates to the field of storage technologies, and more specifically, to a hard disk and a management method.

### BACKGROUND

Cloud storage is a new concept extended and developed from the concept of cloud computing and refers to gather, by using application software, a large quantity of storage devices of various types on a network to work cooperatively by using a function such as a cluster application, a grid technology, or a distributed file system. The storage device includes a hard disk, and the hard disk may include an SOC (System on Chip, system on chip) for processing IO (Input/Output, input/output), a disk sheet motor, a voice coil motor, and the like. How to manage a storage device, in particular a specific component or some components of a hard disk by a cloud storage server (a cloud storage system) is a research hotspot nowadays.

WO 2012/083684 A1 (see also EP 2 717 533 A1) discloses a method, a network card, and a hard disk card for accessing a shut-down hard disk are provided. The method includes: After receiving a shutdown instruction sent by a CPU, a coprocessor is powered up and takes over a network card and a secondary hard disk controller, and after completing the takeover, returns a takeover complete response to the CPU, so that the CPU continues to complete other steps of the shutdown; the coprocessor creates an operation instruction according to a data operation request received by the network card from a requesting party; and the coprocessor sends the operation instruction to the secondary hard disk controller, so that the secondary hard disk controller performs a read/write operation on a hard disk according to the operation instruction, and returns a result of the read/write operation to the requesting party through the network card. When a computer in which a CPU is located is shut down, a coprocessor takes over management work of a network and hard disk reading and writing, and a secondary hard disk controller takes responsibility for controlling a read/write operation on a hard disk. The coprocessor has a quite simple processing function, so that at the same time when accessing of a shut-down hard disk is implemented, energy is consumed as less as possible. Document US 2008010484 A1 discloses in a disk drive connected to a network receiving a diagnosis command, collecting operating environment monitoring data in the disk drive and sending the monitoring data in return.

### SUMMARY

In view of this, objectives of embodiments of the present invention are to provide a hard disk and a management method, so as to implement that a cloud storage service system manages a specific component or some components of a storage device (which is mainly a hard disk). To achieve the foregoing objectives, the embodiments of the present invention provide the following technical solutions:
According to a first aspect of the embodiments of the present invention, a hard disk is provided, including: a manager, a managed component, and a communications interface, where: the communications interface includes a network interface and a management interface, and the managed component includes at least a system on chip SOC; the manager is configured to: receive an external management command by using the management interface, process the received external management command to perform an operation corresponding to the external management command to manage a corresponding managed component, and return a management result by using the management interface; and the network interface is configured to receive an external read/write operation command, so that the SOC performs a corresponding read/write operation according to the received external read/write operation command and returns a read/write operation result by using the network interface.

With reference to the first aspect, in a first possible implementation manner, the managed component further includes a disk sheet motor and a voice coil motor VCM.

With reference to the first possible implementation manner of the first aspect, in a second possible implementation manner, the hard disk further includes at least one of a temperature sensor, a vibration sensor, a humidity sensor, an altitude sensor, a current sensor, and a voltage sensor.

With reference to the first aspect, or the first possible implementation manner of the first aspect, or the second possible implementation manner of the first aspect, in a third possible implementation manner, the manager is a management CPU, and the management interface is an inter-integrated circuit I²C bus interface.

With reference to the third possible implementation manner of the first aspect, in a fourth possible implementation manner, the network interface and the I²C bus interface occupy a same serial attached Small Computer System Interface SAS male connector, a second power supply pin and a third power supply pin of the SAS male connector jointly serve as the I²C bus interface, and a second signal pin, a third signal pin, a fifth signal pin, and a sixth signal pin of the SAS male connector jointly serve as the network interface, or a ninth signal pin, a tenth signal pin, a twelfth signal pin, and a thirteenth signal pin of the SAS male connector jointly serve as the network interface.

With reference to the first aspect, or the first possible implementation manner of the first aspect, or the second possible implementation manner of the first aspect, in a fifth possible implementation manner, the manager is a baseboard management controller BMC, and the management interface is an Intelligent Platform Management Interface IPMI interface.

With reference to the fifth possible implementation manner of the first aspect, in a sixth possible implementation manner, the IPMI interface and the network interface each correspond to a physical Ethernet interface.

With reference to the sixth possible implementation manner of the first aspect, in a seventh possible implementation manner, the hard disk further includes a physical switching chip, where the physical switching chip includes a first interface to a fourth interface, the first interface is connected to the physical Ethernet interface corresponding to the IPMI interface, the second interface is connected to the physical Ethernet interface corresponding to the network interface, the third interface is connected to the BMC, and the fourth interface is connected to the SOC.

According to a second aspect of the embodiments of the present invention, a management method is provided and is used to manage a managed component of the hard disk according to the first aspect to the seventh possible implementation manner of the first aspect, where the method includes:
receiving an external management command by using a management interface;
processing the received external management command to perform an operation
corresponding to the external management command to manage the managed component of the hard disk; and
returning a result by using the management interface.

With reference to the second aspect, in a first possible implementation manner, the management command includes at least one of a power-on command, a power-off command, a first diagnosis command, a second diagnosis command, a third diagnosis command, and a reset command; and for the power-on command, the performing an operation corresponding to the external management command includes: controlling at least one of an SOC, a disk sheet motor, and a VCM to be powered on; for the power-off command, the performing an operation corresponding to the external management command includes: controlling at least one of an SOC, a disk sheet motor, and a VCM to be powered off; for the first diagnosis command, the performing an operation corresponding to the external management command includes: instructing an SOC to provide a running status of the SOC; for the second diagnosis command, the performing an operation corresponding to the external management command includes: instructing an SOC to acquire related data on another component of the hard disk; for the third diagnosis command, the performing an operation corresponding to the external management command includes: instructing an SOC to acquire operating environment monitoring data from an operating environment monitoring unit, where the operating environment monitoring data includes at least one of temperature data, vibration data, humidity data, altitude data, current data, and voltage data; or for the reset command, the performing an operation corresponding to the external management command includes: controlling an SOC to perform reset.

It may be seen that, in the embodiments of the present invention, an SOC is equivalent to a "CPU" of a hard disk, a cloud server may send a read/write command to the SOC by using a network interface to directly control data reading/writing in a disk sheet, and after performing a corresponding read/write operation according to the received external read/write operation command, the SOC returns a read/write operation result by using the network interface. A manager may manage a managed component, for example, the SOC, according to an external management command, which is equivalent to "monitoring" of the hard disk. In this way, an external system or device (a cloud storage system or a cloud storage server) can manage a specific component or some components of a storage device (which is mainly a hard disk) via a manager by delivering an external management command.

### BRIEF DESCRIPTION OF DRAWINGS

To describe the technical solutions in the embodiments of the present invention or in the prior art more clearly, the following briefly introduces the accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.
FIG. 1 is a schematic structural diagram of a hard disk according to an embodiment of the present invention;
FIG. 2 is another schematic structural diagram of a hard disk according to an embodiment of the present invention;
FIG. 3 is a schematic structural diagram of a storage device according to an embodiment of the present invention;
FIG. 4a is still another schematic structural diagram of a hard disk according to an embodiment of the present invention;
FIG. 4b is a schematic structural diagram of a front side of an SAS male connector according to an embodiment of the present invention;
FIG. 4c is a schematic structural diagram of a rear side of an SAS male connector according to an embodiment of the present invention;
FIG. 5 is still another schematic structural diagram of a hard disk according to an embodiment of the present invention;
FIG. 6 is another schematic structural diagram of a storage device according to an embodiment of the present invention;
FIG. 7 is still another schematic structural diagram of a hard disk according to an embodiment of the present invention;
FIG. 8 is a flowchart of a management method according to an embodiment of the present invention;
FIG. 9 is another flowchart of a management method according to an embodiment of the present invention;
FIG. 10 is still another flowchart of a management method according to an embodiment of the present invention; and
FIG. 11 is a schematic structural diagram of a cloud server according to an embodiment of the present invention.

### DESCRIPTION OF EMBODIMENTS

For reference and clarity, technical terms, and abbreviations or acronyms used in the following are summarized and explained as follows:
IO: Input/Output, input/output;
Cache: cache;
IPMI: Intelligent Platform Management Interface;
VCM: Voice coil motor, voice coil motor;
ATA: AT Attachment, computer attachment;
SCSI: Small computer system interface, Small Computer System Interface;
SAS: Serial Attached SCSI, serial attached SCSI, where the SAS is a brand new interface developed after a parallel SCSI interface, and this interface is designed to improve effectiveness, availability, and extensibility of a storage system and provide compatibility with an SATA hard disk;
BCM: Board management controller, baseboard management controller;
I²C: Inter-Integrated Circuit, inter-integrated circuit; and
SGMII: Serial Gigabit Media Independent Interface, serial gigabit media independent interface.

The following clearly and completely describes the technical solutions in the embodiments of the present invention with reference to the accompanying drawings in the embodiments. Apparently, the described embodiments are merely some but not all of the embodiments of the present invention. All other embodiments obtained by a person of ordinary skill in the art based on the embodiments of the present invention without creative efforts shall fall within the protection scope of the present invention.

The embodiments of the present invention disclose a hard disk and a management method, so as to implement that an external system or device (a cloud storage system or a cloud storage server) manages a specific component or some components of a storage device (which is mainly the hard disk).

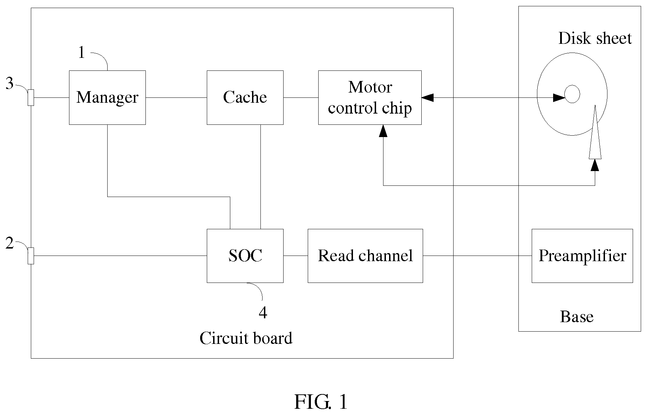

The foregoing storage device may include at least one hard disk. Referring to FIG. 1, the hard disk may include a manager 1, a managed component, and a communications interface, where the communications interface may include a network interface 2 and a management interface 3, and the managed component includes at least an SOC 4. The manager 1 is connected to the management interface 3, and the SOC 4 is connected to the network interface 2.

The manager 1 is configured to: receive an external management command by using the management interface 3, process the received external management command, and perform an operation corresponding to the external management command on a corresponding managed component.

The network interface 2 is configured to receive an external read/write operation command, so that the SOC 4 performs a corresponding read/write operation according to the received external read/write operation command and returns a read/write operation result by using the network interface 2.

It should be noted that the network interface 2 and the management interface 3 may be integrated to form a physical interface, or may be two physical interfaces independent from each other. Detailed introduction is provided in the following in this specification.

The foregoing manager 1, the foregoing network interface 2, the foregoing management interface 3, the foregoing SOC 4, and the like may be integrated into a same circuit board. A disk sheet and a preamplifier are integrated into a base. It should be noted that the circuit board and the base are generally stacked together vertically. To clearly show a relationship between components, FIG. 1 illustrates a schematic diagram of the relationship between the components.

It may be seen that, in this embodiment of the present invention, the SOC 4 is equivalent to a "CPU" of a hard disk, a cloud server may directly control data reading/writing in a disk sheet by sending an external read/write command to the SOC 4 via the network interface 2, and after performing a corresponding read/write operation according to the received external read/write operation command, the SOC 4 returns a read/write operation result by using the network interface 2. The manager 1 may manage a managed component, for example, the SOC 4, according to an external management command, which is equivalent to "monitoring" of the hard disk. In this way, an external system (a cloud storage service system) or device (a cloud server) can manage a specific component or some components of a storage device (which is mainly a hard disk) via the manager 1 by delivering an external management command.

In another embodiment of the present invention, the foregoing manager 1 may be further configured to return an operation result by using the management interface 3.

In addition, the hard disk may further include some conventional components, such as a cache, a VCM, a disk sheet interface, a disk sheet, and a preamplifier. These components may be designed and implemented according to the prior art, and details are not described herein.

It should be noted that the foregoing SOC 4 communicates with the cache, the VCM, and the like that are inside the hard disk by using an internal instruction. A message that is received by the SOC 4 from the network interface 2 and a message that is sent to the cloud server by using the network interface 2 comply with a network protocol (which is generally the Ethernet protocol).

Therefore, the SOC 4 has two main functions: 1. A protocol conversion function, using which data that is received by using the network interface 2 and complies with the network protocol may be converted to an internal command (for example, an ATA/SCSI command)/internal message, or an internal command/internal message is converted to data that complies with the network protocol. 2. An IO management function, using which data reading/writing in a disk sheet may be controlled according to an external read/write command sent by the cloud server.

In addition, a function of the manager 1 may also be integrated into the SOC 4. Therefore, the SOC 4 and the manager 1 may be integrated to form a hardware component, or certainly, may be two independent hardware components. The SOC 4 and the manager 1 may be designed as two independent hardware components so that the external system or device may still manage the storage device (the hard disk) when the SOC 4 is faulty. In this specification, an example in which the SOC 4 and the manager 1 are two independent hardware components is used in the following introduction.

In another embodiment of the present invention, in addition to the SOC 4, the managed component in all the foregoing embodiments may further include a disk sheet motor and a VCM. The disk sheet motor is responsible for controlling rotation of a disk sheet, and the VCM is responsible for controlling motion of a disk head. A motor control chip on the circuit board is responsible for driving the disk sheet motor and the VCM. In an actual application, one motor control chip may be responsible for driving both the disk sheet motor and the VCM, or different motor control chips may be responsible for driving the disk sheet motor and the VCM separately.

In another embodiment of the present invention, the hard disk in all the foregoing embodiments may further include an operating environment monitoring unit. More specifically, the operating environment monitoring unit may include at least one of a temperature sensor, a vibration sensor, a humidity sensor, an altitude sensor, a current sensor, and a voltage sensor.

In the following, internal components of a hard disk and internal components of a storage device are introduced.

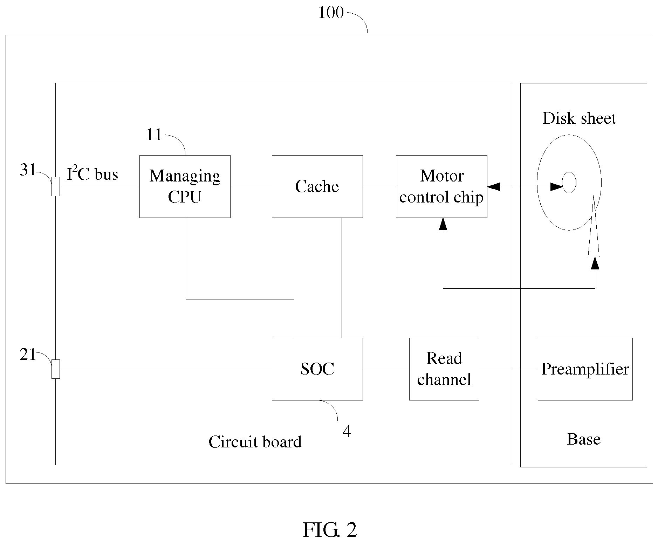

In another embodiment of the present invention, referring to FIG. 2, in all the foregoing embodiments, the manager 1 of the hard disk 100 may be specifically a management CPU 11, the foregoing management interface 3 may be specifically an I²C bus interface 31, and the foregoing network interface 2 may be specifically an Ethernet interface 21. The management CPU 11 is connected to the I²C bus interface 31 by using an I²C bus.

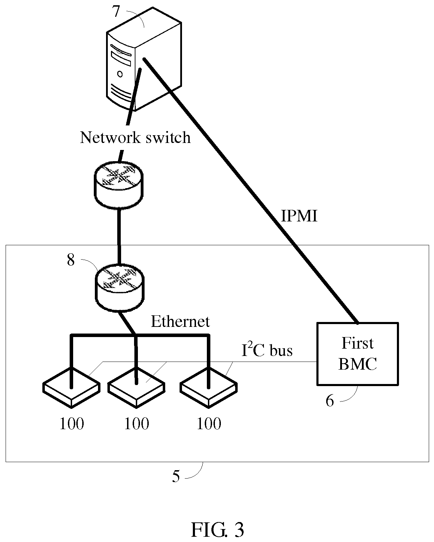

FIG. 3 shows a structure of a storage device 5 including multiple hard disks 100. In this embodiment, the storage device 5 further includes a first BMC 6 and a data switch 8.

The first BMC 6 is connected to the management CPU 11 by using the I²C bus interface and connected to a cloud server 7 by using an IPMI interface; the data switch 8 is separately connected to an SOC 4 and the cloud server 7 by using an Ethernet interface.

The first BMC 6 is at least configured to: convert an external management command that is received by using the IPMI interface and complies with the IPMI protocol to a command that complies with the I²C bus protocol and forward the command to the management CPU 11 by using the I²C bus interface 31; and convert an operation result that is received by using the I²C bus interface 31 and complies with the I²C bus protocol to data that complies with the IPMI protocol and forward the data to the cloud server by using the IPMI interface.

The data switch 8 is mainly configured to transmit IO data.

In addition, the data switch 8 may be further configured to transmit an external read/write operation command, and a read/write operation result returned by the SOC 4 is the foregoing IO data.

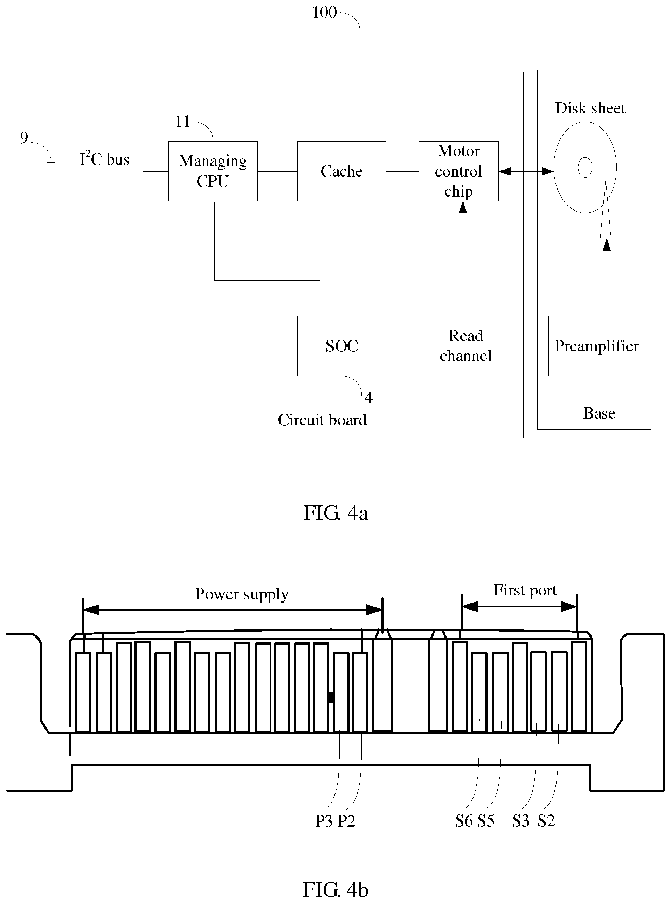

More specifically, referring to FIG. 4a, the foregoing I²C bus interface 31 and the Ethernet interface 21 may be integrated into a physical interface 9.

The foregoing physical interface 9 may be specifically an SAS male connector.

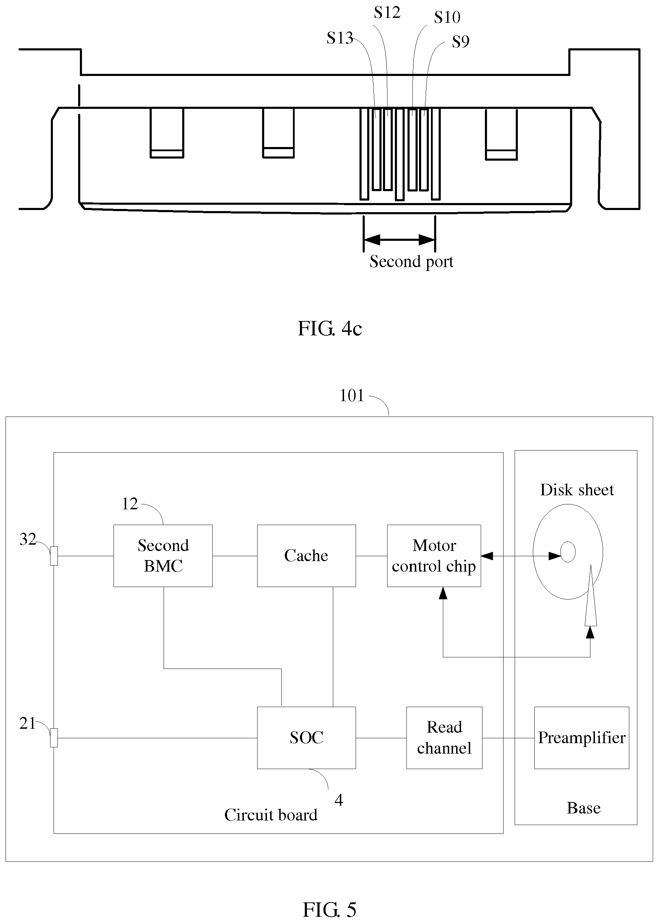

Referring to FIG. 4b and FIG. 4c, FIG. 4b shows a front side of an SAS male connector, and FIG. 4c shows a rear side of the SAS male connector. A first port and power supply pins are disposed on the front side of the SAS male connector, and a second port is disposed on the rear side of the SAS male connector.

First, refer to the first port on which a first signal pin to a seventh signal pin (SI to S7) are disposed successively from right to left. The pins S1, S4, and S7 are for grounding. The pins S2 and S3 are configured to input a differential signal, and the two pins are combined for signal input. The pins S5 and S6 are configured to output a differential signal, and the two pins are combined for signal output.

The second port on the rear side of the SAS male connector is similar to the first port. An eighth signal pin to a fourteenth signal pin (S8 to S14) are disposed successively from right to left. The pins S8, S11, and S14 are for grounding. The S9 and the S10 are configured to input a differential signal, and the two pins are combined for signal input. The S12 and the S13 are configured to output a differential signal, and the two pins are combined for signal output. Then, refer to the power supply pins, where a first power supply pin to a fifteenth power supply pin (PI to P15) are disposed successively from right to left.

In this embodiment, the second power supply pin and the third power supply pin (P2 and P3) may jointly serve as the foregoing I²C bus interface, where the pin P2 may serve as a clock end of the I²C bus interface, and the pin P3 may serve as a data end of the I²C bus interface. The network interface (the Ethernet interface) may be implemented by using the pins S2, S3, S5, and S6 of the first port, where the S2 and the S3 serve as an input end, and the S5 and the S6 serve as an output end; or may be implemented by using the pins S9, S10, S12, and S13 of the second port, where the S9 and the S10 serve as an input end, and the S12 and the S13 serve as an output end.

In addition, it should be noted that the pins S2, S3, S5, and S6 (or the pins S9, S10, S12, and S13) serve as the network interface and are configured to connect the data switch 8 and the SOC 4. Because the pins S2, S3, S5, and S6 (or the pins S9, S10, S12, and S13) are for differential input/output, all protocols based on differential input/output can be supported by the network interface. That is, interworking between the data switch 8 and the SOC 4 can be implemented only when the data switch 8 and the SOC 4 both support same protocols based on differential input/output respectively. For example, the data switch 8 and the SOC 4 may separately support the SGMII protocol.

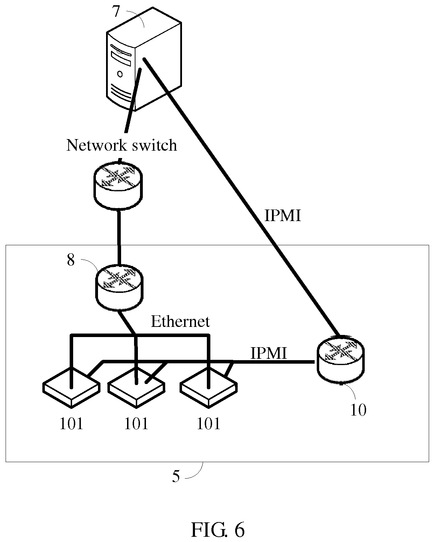

In another embodiment of the present invention, referring to FIG. 5, in all the foregoing embodiments, a manager of a hard disk 101 may be specifically a second BMC 12, the foregoing management interface may be specifically an IPMI interface 32, and the foregoing network interface may be specifically an Ethernet interface 21. It should be noted that information using the IPMI protocol may be transmitted by using an Ethernet interface. Therefore, the IPMI interface 32 and the Ethernet interface 21 may actually be two physical Ethernet interfaces, but only that one physical Ethernet interface fixedly serves as the IPMI interface, and the other physical Ethernet interface fixedly serves as the Ethernet interface. FIG. 6 shows a structure of a storage device 5 including multiple hard disks 101. In this embodiment, the storage device 5 may further include a management switch 10. The management switch 10 is at least configured to: forward a received external management command to the second BMC 12 and forward an operation result returned by the second BMC 12 to a cloud server 7.

It should be noted that each hard disk 101 includes one second BMC 12, and the second BMC 12 has functions of both the foregoing management CPU 11 and the foregoing first BMC 6, and therefore, the first BMC 6 shown in FIG. 3 may be replaced by the management switch 10. The management switch 10 is connected to the second BMC 12 by using the IPMI interface and is connected to the cloud server 7 by using the IPMI interface.

As mentioned previously, the IPMI interface 32 and the Ethernet interface 21 are actually two physical Ethernet interfaces, but only that one fixedly serves as the IPMI interface, and the other fixedly serves as the Ethernet interface. For example, a physical Ethernet interface A fixedly serves as the IPMI interface, and a physical Ethernet interface B fixedly serves as the Ethernet interface. Therefore, a connection mistake is not allowed during connection.

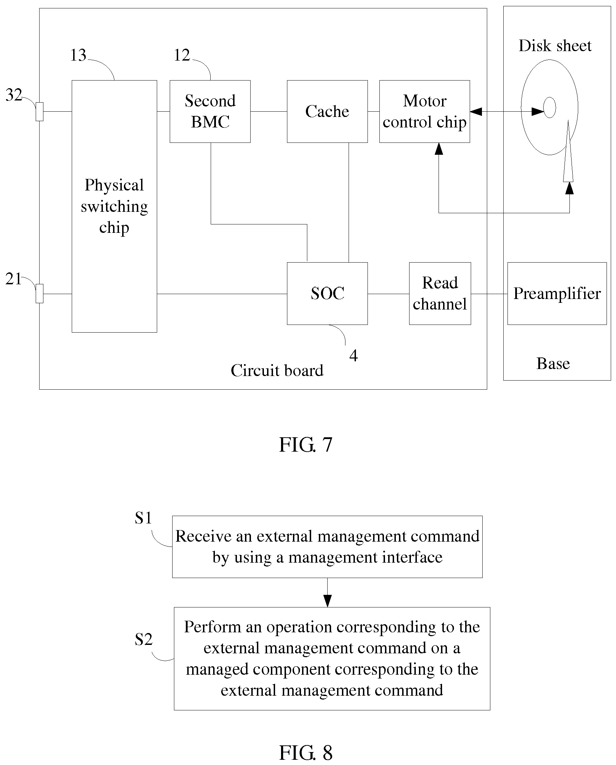

To enable either of the two physical Ethernet interfaces to serve as the IPMI interface or the Ethernet interface, in another embodiment of the present invention, referring to FIG. 7, the foregoing hard disk may further include a physical switching chip 13. The physical switching chip 13 includes a first interface to a fourth interface, where the first interface is connected to the IPMI interface 32 (a corresponding physical Ethernet interface), the second interface is connected to the Ethernet interface 21 (a corresponding physical Ethernet interface), the third interface is connected to the second BMC 12, and the fourth interface is connected to the SOC 4.

Two IP addresses are configured for the second BMC 12 and the SOC 4, and in this case, the second BMC 12 and the SOC 4 may be directly accessed by using the IP addresses; in addition, either of the two physical Ethernet interfaces may serve as the IPMI interface or the Ethernet interface.

It should be noted that, because access may be performed by using the IP addresses, the physical switching chip 13 may be connected by using only one physical Ethernet interface. The physical Ethernet interface is the IPMI interface 32 when data that complies with the IPMI protocol is transmitted, and is the Ethernet interface 21 when data that complies with the Ethernet protocol is transmitted.

It should be noted that the storage device in all the foregoing embodiments is also a protected object of the embodiments of the present invention. For structural composition of the storage device, reference may be made to the foregoing descriptions in this specification, and details are not repeatedly described herein.

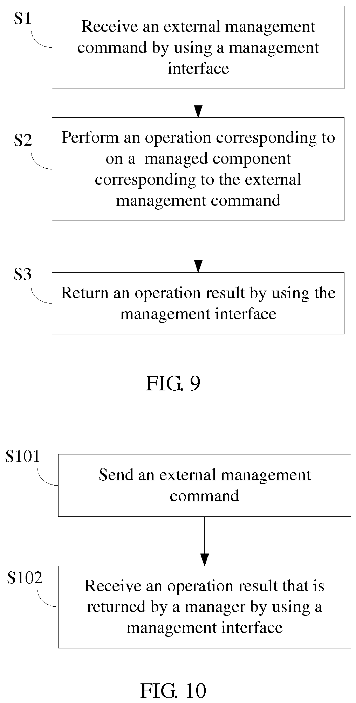

Correspondingly, when executed by the foregoing manager, referring to FIG. 8, the foregoing management method may include at least the following steps:
S1: Receive an external management command by using a management interface 3.
   The foregoing external management command generally comes from a cloud server or a cloud storage system.
S2: Process the received external management command and perform an operation corresponding to the external management command on a corresponding managed component.
   In another embodiment of the present invention, referring to FIG. 9, the foregoing management method may further include the following step:
S3: Return an operation result by using the management interface 3.

The operation corresponding to the external management command and performed by the manager is introduced in the following.

### 1. Powering on:

The following situation is considered: Multiple storage devices are generally required for storage in a cloud storage technology, and one storage device may include multiple hard disks. A strong current flows through when a hard disk is powered on; therefore, when a large quantity of hard disks is powered on simultaneously, a current surge may occur.

To resolve the problem, the foregoing management command may include a power-on command, and in this case, the cloud server may deliver power-on commands in batches to control hard disks to be powered on in batches, thereby solving the problem that a current surge may occur when a large quantity of hard disks is powered on simultaneously.

Further, the following situation is considered: Some components of a hard disk consume more power. Power consumption may be reduced if it can be controlled that a component that consumes more power is powered on when required
Therefore, in another embodiment of the present invention, the managed component in all the foregoing embodiments may further include a disk sheet motor and a VCM (a motor consumes more power) in addition to the SOC 4.

Correspondingly, the "performing an operation corresponding to the external management command" in the foregoing step S2 may include: controlling at least one of the SOC, the disk sheet motor, and the VCM to be powered on.

### 2. Powering off:

Similar to powering on, powering off a hard disk may also be controlled by the cloud server. Therefore, the foregoing management command may include a power-off command.

Correspondingly, the "performing an operation corresponding to the external management command" in the foregoing step S2 may include: controlling at least one of the SOC, the disk sheet motor, and the VCM to be powered off.

### 3. Diagnosis:

When a hard disk is faulty, the cloud server may need to diagnose the hard disk. Therefore, the foregoing management command may include a diagnosis command. Further, because diagnosed objects are different, the diagnosis command may include a first diagnosis command, a second diagnosis command, and a third diagnosis command.

A diagnosed object for the first diagnosis command is the SOC. Therefore, after the first diagnosis command is received, the "performing an operation corresponding to the external management command" in the foregoing step S2 may include: (a manager 1) instructing the SOC 4 to provide a running status of the SOC 4.

Correspondingly, the "operation result" in step S3 includes the running status of the SOC 4. A diagnosed object for the second diagnosis command is another component (for example, a disk sheet) of the hard disk. After the second diagnosis command is received, the "performing an operation corresponding to the external management command" in the foregoing step S2 may include: (a manager 1) instructing the SOC 4 to acquire related data on the another component (for example, the disk sheet) of the hard disk.

Because the hard disk includes multiple components, and different components may have different physical properties, the second diagnosis command may be subdivided into multiple diagnosis sub-commands, so that diagnosis is performed for the different physical properties of the different components.

Correspondingly, the "operation result" in step S3 includes related data on the another component of the hard disk.

A diagnosed object for the third diagnosis command is an operating environment of the hard disk. The operating environment may be reflected by operating environment monitoring data collected by an operating environment monitoring unit.

Therefore, after the third diagnosis command is received, the "performing an operation corresponding to the external management command" in the foregoing step S2 may include: (a manager 1) instructing the SOC 4 to acquire the operating environment monitoring data collected by the operating environment monitoring unit.

Correspondingly, the "operation result" in step S3 includes the operating environment monitoring data.

The operating environment monitoring unit may include at least one of a temperature sensor, a vibration sensor, a humidity sensor, an altitude sensor, a current sensor, and a voltage sensor; therefore, correspondingly, the operating environment monitoring data may include at least one of temperature data, vibration data, humidity data, altitude data, current data, and voltage data.

### 4. Reset:

To facilitate the cloud server in controlling reset of the SOC, the foregoing management command may include a reset command. Correspondingly, the "performing an operation corresponding to the external management command" in step S2 may include: (a manager 1) controlling the SOC 4 to perform reset.

Correspondingly, the "operation result" in step S3 includes a reset result of the SOC 4.

The foregoing reset command may further include a warm reset command and a cold reset command (cold reset is generally performed when warm reset fails). When receiving the warm reset command, the manager 1 sends a warm reset instruction to the SOC 4. However, when receiving the cold reset command, the manager 1 directly controls reset of the SOC 4 by powering off and then powering on.

It should be noted that the foregoing powering on, powering off, diagnosis, reset, and the like may form a series of management processes. For example:
A: A cloud server delivers a power-on command to control a hard disk A to be powered on.
B: After the powering on, the cloud server delivers diagnosis commands (a first diagnosis command and a third diagnosis command) when a network interface or an IO interface of the hard disk A does not respond.
C: A manager of the hard disk A returns a running status of an SOC and operating environment monitoring data.
D: When determining, according to the running status of the SOC of the hard disk A and the operating environment monitoring data, that the hard disk A cannot be recovered, the cloud server delivers a warm reset command.
E: The manager of the hard disk A delivers a warm reset instruction to the SOC.
F: Assuming that warm set cannot be performed on the SOC, the manager of the hard disk A returns an operation result indicating that (warm) reset cannot be performed.
G: The cloud server delivers a cold reset command.
H: The manager of the hard disk A performs cold reset on the SOC. If the reset still cannot be performed, the manager returns an operation result indicating that (cold) reset cannot be performed.
I: The cloud server isolates the hard disk A from a cloud storage system, and transfers a task of the hard disk A to another hard disk for execution.
K: The cloud server delivers a power-off command.
L: The manager of the hard disk A controls the SOC to be powered off.

Alternatively, in step B, when the network interface or the IO interface of the hard disk A does not respond, the cloud server delivers a second diagnosis command.

If an operation result returned by the manager of the hard disk A indicates that there is a bad track on a disk sheet, the cloud server may deliver a more detailed diagnosis sub-command for the disk sheet.

Afterwards, if it is determined, according to an operation result returned by the hard disk A, that the hard disk A may continue to be used, the cloud server continues to use the hard disk. However, if it is determined, according to an operation result returned by the hard disk A, that it is inappropriate to continue to use the hard disk A, the cloud server isolates the hard disk A from the cloud storage system, transfers a task of the hard disk A to another hard disk for execution, and then delivers a power-off command for the hard disk A to control the hard disk A to be powered off.

Correspondingly, an embodiment of the present invention further provides another management method, where the management method is executed by a cloud server or another external device. The management method is used to manage the storage device (the hard disk) in all the foregoing embodiments. Referring to FIG. 10, the method includes:
S101: Send an external management command, so that a manager in a storage device performs an operation corresponding to the external management command on a corresponding managed component.
   In another embodiment of the present invention, the foregoing method may further include the following step:
S102: Receive an operation result returned by the manager.

For related details, reference may be made to the foregoing descriptions in this specification, and details are not repeatedly described herein.

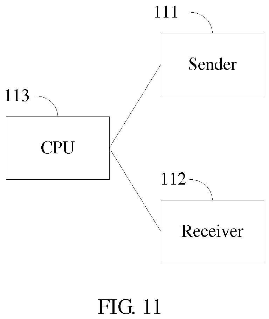

Correspondingly, an embodiment of the present invention further provides a cloud server configured to manage the storage device in all the foregoing embodiments. Referring to FIG. 11, the cloud server may include:
a sender 111, configured to send an external management command, so that a manager in the storage device performs an operation corresponding to the external management command on a corresponding managed component.

In another embodiment of the present invention, the foregoing cloud server may further include a receiver 112, configured to receive an operation result returned by the manager in the storage device.

In another embodiment of the present invention, still referring to FIG. 11, the foregoing cloud server may further include a CPU 113, where the CPU 113 may be at least configured to generate the foregoing external management command.

The embodiments in this specification are all described in a progressive manner, for same or similar parts in the embodiments, reference may be made to these embodiments, and each embodiment focuses on a difference from other embodiments.

In combination with the embodiments disclosed in this specification, method or algorithm steps may be implemented by hardware, a software module executed by a processor, or a combination thereof. The software module may be disposed in a random access memory (RAM), a memory, a read-only memory (ROM), an electrically programmable ROM, an electrically erasable programmable ROM, a register, a hard disk, a removable disk, a CD-ROM, or a storage medium in any other forms well-known in the art.

The foregoing descriptions of the disclosed embodiments enable a person skilled in the art to understand or implement the present invention. Various modifications to the embodiments are obvious to the person skilled in the art, and general principles defined in this specification may be implemented in other embodiments without departing from the spirit or scope of the present invention.

## Claims

1. A hard disk (100), comprising: a manager (1, 11), a managed component, and a communication interface (2, 3, 21, 31), wherein:
the communication interface (2, 3, 21, 31) comprises a network interface (2, 21) and a management interface (3, 31), and the managed component comprises at least a system on chip, SOC (4);
the manager (1, 11) is configured to: receive an external management command from a cloud server or a cloud storage service system by using the management interface (3, 31), process the received external management command to perform an operation corresponding to the external management command to manage a managed component indicated in the external management command, and return a management result by using the management interface (3, 31); and
the network interface (2, 21) is configured to receive an external read/write operation command, so that the SOC (4) is configured to perform a corresponding read/write operation according to the received external read/write operation command and is configured to return a read/write operation result by using the network interface (2, 21);
wherein the manager (1) and the SOC (4) are two independent hardware components,
wherein the external management command includes a diagnosis command, and
wherein the manager (1) is further configured to, when receiving the diagnosis command, instruct the SOC (4) to acquire operating environment monitoring data collected by an operating environment monitoring unit and return the operating environment monitoring data by using the management interface (3, 31).

2. The hard disk according to claim 1, wherein the managed component further comprises a disk sheet motor and a voice coil motor, VCM.

3. The hard disk according to claim 2, further comprising at least one of a temperature sensor, a vibration sensor, a humidity sensor, an altitude sensor, a current sensor, and a voltage Sensor.

4. The hard disk according to any one of claims 1 to 3, wherein the manager (1, 11) is a management central processing unit, CPU, and the management interface (3, 31) is an inter-integrated circuit, I²C bus interface.

5. The hard disk according to claim 4, wherein the network interface (2, 21) and the I²C bus interface occupy a same serial attached Small Computer System Interface, SAS male connector, a second power supply pin and a third power supply pin of the SAS male connector jointly serve as the I²C bus interface, and a second signal pin, a third signal pin, a fifth signal pin, and a sixth signal pin of the SAS male connector jointly serve as the network interface, or a ninth signal pin, a tenth signal pin, a twelfth signal pin, and a thirteenth signal pin of the SAS male connector jointly serve as the network interface.

6. The hard disk according to any one of claims 1 to 3, wherein the manager (1, 11) is a baseboard management controller, BMC (12), and the management interface is an Intelligent Platform Management Interface, IPMI (32).

7. The hard disk according to claim 6, wherein the IPMI interface (32) and the network interface (2, 21) both are a physical Ethernet interface.

8. The hard disk according to claim 7, wherein the hard disk further comprises a physical switching chip (13), wherein the physical switching chip (13) comprises a first interface to a fourth interface, the first interface is connected to the physical Ethernet interface serving as the IPMI interface, the second interface is connected to the physical Ethernet interface serving as the network interface, the third interface is connected to the BMC, and the fourth interface is connected to the SOC.

9. A management method, used to manage a managed component of the hard disk according to claims 1 to 8, wherein the method comprises:
receiving an external management command by using a management interface (3, 31);
processing the received external management command to perform an operation corresponding to the external management command to manage the managed component indicated in the external management command of the hard disk; and
returning a management result by using the management interface (3, 31),
wherein the management command comprises at least one from the following commands: a power-on command, a power-off command, a first diagnosis command, a second diagnosis command, a third diagnosis command, and a reset command; and
when the external management command is the power-on command, the performing an operation corresponding to the external management command comprises: controlling at least one of an SOC (4), a disk sheet motor, and a VCM to be powered on;
when the external management command is the power-off command, the performing an operation corresponding to the external management command comprises: controlling at least one of an SOC (4), a disk sheet motor, and a VCM to be powered off;
when the external management command is the first diagnosis command, the performing an operation corresponding to the external management command comprises: instructing an SOC (4) to provide a running status of the SOC (4);
when the external management command is the second diagnosis command, the performing an operation corresponding to the external management command comprises: instructing an SOC (4) to acquire related data on another component of the hard disk;
when the external management command is the third diagnosis command, the performing an operation corresponding to the external management command comprises: instructing an SOC (4) to acquire operating environment monitoring data collected by an operating environment monitoring unit, wherein the operating environment monitoring data comprises at least one of temperature data, vibration data, humidity data, altitude data, current data, and voltage data; or
when the external management command is the reset command, the performing an operation corresponding to the external management command comprises: controlling an SOC (4) to perform reset.

## Patentansprüche

1. Festplatte (100), die Folgendes umfasst: einen Manager (1, 11), eine gemanagte Komponente und eine Kommunikationsschnittstelle (2, 3, 21, 31), wobei:
die Kommunikationsschnittstelle (2, 3, 21, 31) eine Netzwerkschnittstelle (2, 1) und eine Managementschnittstelle (3, 31) umfasst, wobei die gemanagte Komponente wenigstens ein System-auf-Chip, SOC (System-On-Chip), (4) umfasst;
der Manager (1, 11) zu Folgendem konfiguriert ist: Empfangen eines externen Managementbefehls von einem "Cloud"-Server oder einem "Cloud"-Speicherdienstsystem durch Verwenden der Managementschnittstelle (3, 31), Verarbeiten des empfangenen externen Managementbefehls, um einen Vorgang durchzuführen, der dem externen Managementbefehl entspricht, um eine gemanagte Komponente zu managen, die in dem externen Managementbefehl angegeben wird, und Zurücksenden eines Managementergebnisses durch Verwenden der Managementschnittstelle (3, 31); und
die Netzwerkschnittstelle (2, 21) zum Empfangen eines externen Lese/Schreib-Vorgang-Befehls konfiguriert ist, so dass das SOC (4) zum Durchführen eines entsprechenden Lese/Schreib-Vorgangs gemäß dem empfangenen externen Lese/Schreib-Vorgang-Befehl konfiguriert wird und zum Zurücksenden eines Lese/Schreib-Vorgang-Ergebnisses durch Verwenden der Netzwerkschnittstelle (2, 21) konfiguriert wird;
wobei der Manager (1) und das SOC (4) zwei unabhängige Hardwarekomponenten sind,
wobei der externe Managementbefehl einen Diagnosebefehl beinhaltet, und
wobei der Manager (1) ferner zum Anweisen des SOC dazu (4) konfiguriert ist, wenn der Diagnosebefehl empfangen wird, Betriebsumgebungsüberwachungsdaten zu erfassen, die durch eine Betriebsumgebungsüberwachungseinheit gesammelt werden, und die Betriebsumgebungsüberwachungsdaten durch Verwenden der Managementschnittstelle (3, 31) zurückzusenden.

2. Festplatte nach Anspruch 1, wobei die gemanagte Komponente ferner einen Plattenscheibenmotor und einen Schwingspulenmotor, VCM (Voice Coil Motor), umfasst.

3. Festplatte nach Anspruch 2, die ferner einen Temperatursensor und/oder einen Vibrationssensor und/oder einen Luftfeuchtigkeitssensor und/oder einen Höhensensor und/oder einen Stromsensor und/oder einen Spannungssensor umfasst.

4. Festplatte nach einem der Ansprüche 1 bis 3, wobei der Manager (1, 11) eine Managementzentralverarbeitungseinheit bzw. Management-CPU (Central Processing Unit) ist und die Verwaltungsschnittstelle (3, 31) eine Zwischen-integrierte-Schaltung- bzw. I²C(Inter-Integrated Circuit)-Bus-Schnittstelle ist.

5. Festplatte nach Anspruch 4, wobei die Netzwerkschnittstelle (2, 21) und die I²C-Bus-Schnitststelle einen gleichen männlichen Serielle-angebrachte-"Small-ComputerSystem"-Schnittstelle- bzw. SAS-Verbinder belegen, wobei ein zweiter Leistungsversorgungsstift und ein dritter Leistungsversorgungsstift des männlichen SAS-Verbinders gemeinsam als die I²C-Bus-Schnittstelle dienen und wobei ein zweiter Signalstift, ein dritter Signalstift, ein fünfter Signalstift und ein sechster Signalstift des männlichen SAS-Verbinders gemeinsam als die Netzwerkschnittstelle dienen oder wobei ein neunter Signalstift, ein zehnter Signalstift, ein zwölfter Signalstift und ein dreizehnter Signalstift des männlichen SAS-Verbinders gemeinsam als die Netzwerkschnittstelle dienen.

6. Festplatte nach einem der Ansprüche 1 bis 3, wobei der Manager (1, 11) ein "Baseboard-Management-Controller", BMC, (12) ist und die Managementschnittstelle eine Intelligente Plattformmanagementschnittstelle, IPMI (Intelligent Platform Management Interface), (32) ist.

7. Festplatte nach Anspruch 6, wobei die IPMI-Schnittstelle (32) und die Netzwerkschnittstelle (2, 21) beide eine physische Ethernet-Schnittstelle sind.

8. Festplatte nach Anspruch 7, wobei die Festplatte ferner einen physischen Schaltchip (13) umfasst, wobei der physische Schaltchip (13) eine erste Schnittstelle bis zu einer vierten Schnittstelle umfasst, wobei die erste Schnittstelle mit der physischen Ethernet-Schnittstelle verbunden ist, die als IPMI-Schnittstelle dient, wobei die zweite Schnittstelle mit der physischen Ethernet-Schnittstelle verbunden ist, die als die Netzwerkschnittstelle dient, wobei die dritte Schnittstelle mit dem BMC verbunden ist und wobei die vierte Schnittstelle mit dem SOC verbunden ist.

9. Managementverfahren, das zum Managen einer gemanagten Komponente der Festplatte nach Ansprüchen 1 bis 8 verwendet wird, wobei das Verfahren Folgendes umfasst:
Empfangen eines externen Managementbefehls durch Verwenden der Managementschnittstelle (3, 31);
Verarbeiten des empfangenen externen Managementbefehls, um einen Vorgang durchzuführen, der dem externen Managementbefehl entspricht, um die gemanagte Komponente der Festplatte zu managen, welche in dem externen Managementbefehl angegeben wird; und
Zurücksenden eines Managementergebnisses durch Verwenden der Managementschnittstelle (3, 31),
wobei der Managementbefehl wenigstens einen der folgenden Befehle umfasst:
einen Einschaltbefehl, einen Ausschaltbefehl, einen ersten Diagnosebefehl, einen zweiten Diagnosebefehl, einen dritten Diagnosebefehl und einen Rücksetzbefehl; und
wobei, wenn der externe Managementbefehl der Einschaltbefehl ist, das Durchführen eines Vorgangs, der dem externen Managementbefehl entspricht, Folgendes umfasst:
Steuern eines SOC (4) und/oder eines Plattenscheibenmotors und/oder eines VCM zum Einschalten;
wobei, wenn der externe Managementbefehl der Ausschaltbefehl ist, das Durchführen eines Vorgangs, der dem externen Managementbefehl entspricht, Folgendes umfasst: Steuern eines SOC (4) und/oder eines Plattenscheibenmotors und/oder eines VCM zum Ausschalten;
wobei, wenn der externe Managementbefehl der erste Diagnosebefehl ist, das Durchführen eines Vorgangs, der dem externen Managementbefehl entspricht, Folgendes umfasst: Anweisen eines SOC (4) dazu, einen Laufstatus des SOC (4) bereitzustellen;
wobei, wenn der externe Managementbefehl der zweite Diagnosebefehl ist, das Durchführen eines Vorgangs, der dem externen Managementbefehl entspricht, Folgendes umfasst: Anweisen eines SOC (4) dazu, Daten zu erfassen, die eine andere Komponente der Festplatte betreffen;
wobei, wenn der externe Managementbefehl der dritte Diagnosebefehl ist, das Durchführen eines Vorgangs, der dem externen Managementbefehl entspricht, Folgendes umfasst: Anweisen eines SOC (4) dazu, Betriebsumgebungsüberwachungsdaten zu erfassen, die durch eine Betriebsumgebungsüberwachungseinheit gesammelt werden, wobei die Betriebsumgebungsüberwachungsdaten Temperaturdaten und/oder Vibrationsdaten und/oder Luftfeuchtigkeitsdaten und/oder Höhendaten und/oder Stromdaten und/oder Spannungsdaten umfassen; oder
wobei, wenn der externe Managementbefehl der Rücksetzbefehl ist, das Durchführen eines Vorgangs, der dem externen Managementbefehl entspricht, Folgendes umfasst: Steuern eines SOC (4) zum Durchführen einer Rücksetzung.

## Revendications

1. Disque dur (100) comprenant : un gestionnaire (1, 11), un composant géré, et une interface de communication (2, 3, 21, 31), dans lequel :
l'interface de communication (2, 3, 21, 31) comprend une interface réseau (2, 21) et une interface de gestion (3, 31), et le composant géré comprend au moins un système sur puce, SOC (4) ;
le gestionnaire (1, 11) est configuré pour : recevoir une commande de gestion externe à partir d'un serveur en nuage ou d'un système de service de stockage en nuage en utilisant l'interface de gestion (3, 31), traiter la commande de gestion externe reçue pour effectuer une opération correspondant à la commande de gestion externe pour gérer un composant géré indiqué dans la commande de gestion externe, et renvoyer un résultat de gestion en utilisant l'interface de gestion (3, 31) ; et
l'interface réseau (2, 21) est configurée pour recevoir une commande d'opération de lecture/écriture extérieure, de sorte que le SOC (4) est configuré pour exécuter une opération de lecture/écriture correspondante en fonction de la commande d'opération de lecture/écriture extérieure reçue, et est configuré renvoyer un résultat d'opération de lecture/écriture en utilisant l'interface réseau (2, 21) ;
dans lequel le gestionnaire (1) et le SOC (4) sont deux composants matériels indépendants,
dans lequel la commande de gestion externe comprend une commande de diagnostic, et
dans lequel, le gestionnaire (1) est en outre configuré pour, lorsqu'il reçoit la commande de diagnostic, ordonner au SOC (4) d'acquérir des données de surveillance d'environnement d'exploitation collectées par une unité de surveillance d'environnement d'exploitation, et renvoyer les données de surveillance d'environnement d'exploitation en utilisant l'interface de gestion (3, 31).

2. Disque dur selon la revendication 1, dans lequel le composant géré comprend en outre un moteur de feuille de disque et un moteur de bobine mobile, VCM.

3. Disque dur selon la revendication 2, comprenant en outre au moins l'un parmi un capteur de température, un capteur de vibrations, un capteur d'humidité, un capteur d'altitude, un capteur de courant, et un capteur de tension.

4. Disque dur selon l'une quelconque des revendications 1 à 3, dans lequel le gestionnaire (1, 11) est une unité centrale de traitement de gestion, CPU, et l'interface de gestion (3, 31) est une interface de bus de circuit inter-intégré, I²C.

5. Disque dur selon la revendication 4, dans lequel l'interface réseau (2, 21) et l'interface de bus I²C occupent un même connecteur mâle d'interface système pour micro-ordinateurs, SAS, monté en série, une seconde broche d'alimentation et une troisième broche d'alimentation du connecteur mâle SAS servent conjointement d'interface de bus I²C, et une seconde broche de signal, une troisième broche de signal, une cinquième broche de signal, et une sixième broche de signal du connecteur mâle SAS servent conjointement d'interface réseau, ou une neuvième broche de signal, une dixième broche de signal, une douzième broche de signal, et une treizième broche de signal du connecteur mâle SAS servent conjointement d'interface réseau.

6. Disque dur selon l'une quelconque des revendications 1 à 3, dans lequel le gestionnaire (1, 11) est un contrôleur de gestion de carte mère, BMC (12), et l'interface de gestion est une interface de gestion de plate-forme intelligente, IPMI (32).

7. Disque dur selon la revendication 6, dans lequel l'interface IPMI (32) et l'interface réseau (2, 21) sont toutes deux une interface Ethernet physique.

8. Disque dur selon la revendication 7, dans lequel le disque dur comprend en outre une puce de commutation physique (13), dans lequel la puce de commutation physique (13) comprend une première interface à une quatrième interface, la première interface est connectée à l'interface Ethernet physique servant d'interface IPMI, la seconde interface est connectée à l'interface Ethernet physique servant d'interface réseau, la troisième interface est connectée au BMC, et la quatrième interface est connectée au SOC.

9. Procédé de gestion, utilisé pour gérer un composant géré du disque dur selon les revendications 1 à 8, dans lequel le procédé comprend de :
recevoir une commande de gestion externe en utilisant une interface de gestion (3, 31) ;
traiter la commande de gestion externe reçue pour effectuer une opération correspondant à la commande de gestion externe pour gérer le composant géré indiqué dans la commande de gestion externe du disque dur ; et
renvoyer un résultat de gestion en utilisant l'interface de gestion (3,31),
dans lequel la commande de gestion comprend au moins l'une des commandes suivantes : une commande de mise sous tension, une commande de mise hors tension, une première commande de diagnostic, une seconde commande de diagnostic, une troisième commande de diagnostic, et une commande de réinitialisation ; et
lorsque la commande de gestion externe est la commande de mise sous tension, l'exécution d'une opération correspondant à la commande de gestion externe comprend de : commander au moins l'un d'un SOC (4), d'un moteur de feuille de disque, et d'un VCM à mettre sous tension ;
lorsque la commande de gestion externe est la commande de mise hors tension, l'exécution d'une opération correspondant à la commande de gestion externe comprend de : commander au moins l'un d'un SOC (4), d'un moteur de feuille de disque, et d'un VCM à mettre hors tension ;
lorsque la commande de gestion externe est la première commande de diagnostic, l'exécution d'une opération correspondant à la commande de gestion externe comprend de : ordonner à un SOC (4) de fournir un statut de fonctionnement du SOC (4) ;
lorsque la commande de gestion externe est la seconde commande de diagnostic, l'exécution d'une opération correspondant à la commande de gestion externe comprend de : ordonner à un SOC (4) d'acquérir des données associées sur un autre composant du disque dur ;
lorsque la commande de gestion externe est la troisième commande de diagnostic, l'exécution d'une opération correspondant à la commande de gestion externe comprend de : ordonner à un SOC (4) d'acquérir des données de surveillance d'environnement d'exploitation collectées par une unité de surveillance d'environnement d'exploitation, dans lequel les données de surveillance d'environnement d'exploitation comprennent au moins un type de données parmi des données de température, des données de vibrations, des données d'humidité, des données d'altitude, des données de courant, et des données de tension ; ou
lorsque la commande de gestion externe est la commande de réinitialisation, l'exécution d'une opération correspondant à la commande de gestion externe comprend de : commander un SOC (4) pour effectuer une réinitialisation.
